Europäisches Patentamt

European Patent Office

Office européen des brevets

(19)

(11) Veröffentlichungsnummer : **0 141 413**
**B1**

(12) # EUROPÄISCHE PATENTSCHRIFT

(45) Veröffentlichungstag der Patentschrift :
**15.06.88**

(51) Int. Cl.⁴ : **B 60 J    3/02**

(21) Anmeldenummer : **84113243.4**

(22) Anmeldetag : **03.11.84**

(54) **Lagerbock für die Sonnenblende eines Kraftfahrzeugs.**

(30) Priorität : **07.11.83 DE 8331824 U**

(43) Veröffentlichungstag der Anmeldung :
**15.05.85 Patentblatt 85/20**

(45) Bekanntmachung des Hinweises auf die Patenterteilung : **15.06.88 Patentblatt 88/24**

(84) Benannte Vertragsstaaten :
**DE FR GB IT**

(56) Entgegenhaltungen :
**DE-A- 2 703 447**
**FR-A- 2 418 110**

(73) Patentinhaber : **BAYERISCHE MOTOREN WERKE
Aktiengesellschaft
Postfach 40 02 40 Petuelring 130 - AJ-36
D-8000 München 40 (DE)**

(72) Erfinder : **Graf, Josef, Dipl.-Ing.
Türkheimer Strasse 20
D-8938 Buchloe (DE)**

(74) Vertreter : **Dexheimer, Rolf
c/o Bayerische Motoren Werke Aktiengesellschaft
Postfach 40 02 40
D-8000 München 40 (DE)**

EP 0 141 413 B1

## Beschreibung

Die Erfindung bezieht sich auf einen Lagerbock der im Oberbegriff des Patentanspruchs 1 genannten Art, welche aus der DE-A-27 30 926 hervorgeht.

Da Sonnenblenden sowohl mit einer Stromführung für eine Spiegelbeleuchtung als auch ohne diese in einer Personenkraftwagen eingebaut werden, müssen für ihre Montage verschiedenartige Lagerböcke, nämlich solche mit und ohne elektrischem Kontaktelement verfügbar sein. Letzteres wird bei dem bekannten Lagerbock nach seiner Herstellung — was üblicherweise durch Spritzgießen erfolgt — mittels einer Presse in die Aufnahmeöffnung eingepreßt, was vergleichsweise zeitaufwendig ist. Durch verschiedenartige Lagerböcke wird ferner auch die Lagerhaltung umfangreicher und es sind auch Verwechslungen bei Montage der Sonnenblende nicht ganz auszuschließen.

Aufgabe der Erfindung ist es daher, einen Lagerbock der eingangs genannten Gattung mit geringem Fertigungsaufwand derart auszubilden, daß er bei Montage der Sonnenblende im Kraftfahrzeug in jeweils Vollkommen gleichartiger Ausführungsform sowohl ohne als auch mit einem elektrischen Kontaktelement zu verwenden ist, wobei dieses mit bloßem manuellem Kraftaufwand in die Aufnahmeöffnung eingesetzt werden soll.

Zur Lösung der Aufgabe sind die im kennzeichnenden Teil des Patentanspruchs 1 dargelegten Gestaltungsmerkmale vorgesehen.

Neben der Vermeidung der Nachteile des Standes der Technik, wobei insbesondere eine vereinfachte Lagerhaltung und die damit verbundene Kostenverminderung hervorzuheben ist, kann der Einführschlitz zum Einsetzen der Lagerwelle der Sonnenblende in die Lageraufnahme des Lagerbocks an diesem nach unten, schräg oder seitlich gerichtet sein. Da ferner das elektrische Kontaktelement über eine relativ große Längserstreckung federn kann, liegt es an seinem freien Endabschnitt mit hohem Reibschluß und damit gutem elektrischen Kontakt an der Lagerwelle bzw. an dem an diesem vorgesehenen Kontaktelement an.

Nachdem die Aufnahmeöffnung über ihre gesamte Längserstreckung ein gleichgroßes Querschnittsprofil aufweist (Merkmal des Patentanspruchs 2), ist die Spritzgußform zur Erzeugung der Aufnahmeöffnung vergleichsweise einfach herzustellen.

Ein aus einem Blechstreifen gefertigtes Kontaktelement, das einen Schrägabschnitt und eine Fixierzunge aufweist, kann in einfacher Weise durch spanlose Umformung hergestellt werden (Merkmale der Patentansprüche 3 und 4).

Ein Ausführungsbeispiel der Erfindung ist in den Zeichnungen dargestellt und wird im folgenden erläutert. Es zeigt :

Fig. 1 einen Schnitt längs der Linie A-B in Fig. 3 mit einem elektrischen Kontaktelement vor Einführung in die Aufnahmeöffnung, wobei der Einführschlitz nach unten gerichtet ist,

Fig. 2 ebenfalls einen Schnitt längs der Linie A-B in Fig. 3 mit in die Aufnahmeöffnung eingesetztem elektrischen Kontaktelement, wobei der Einführschlitz seitlich gerichtet ist,

Fig. 3 eine Draufsicht auf den in den Fig. 1 und 2 dargestellten Lagerbock.

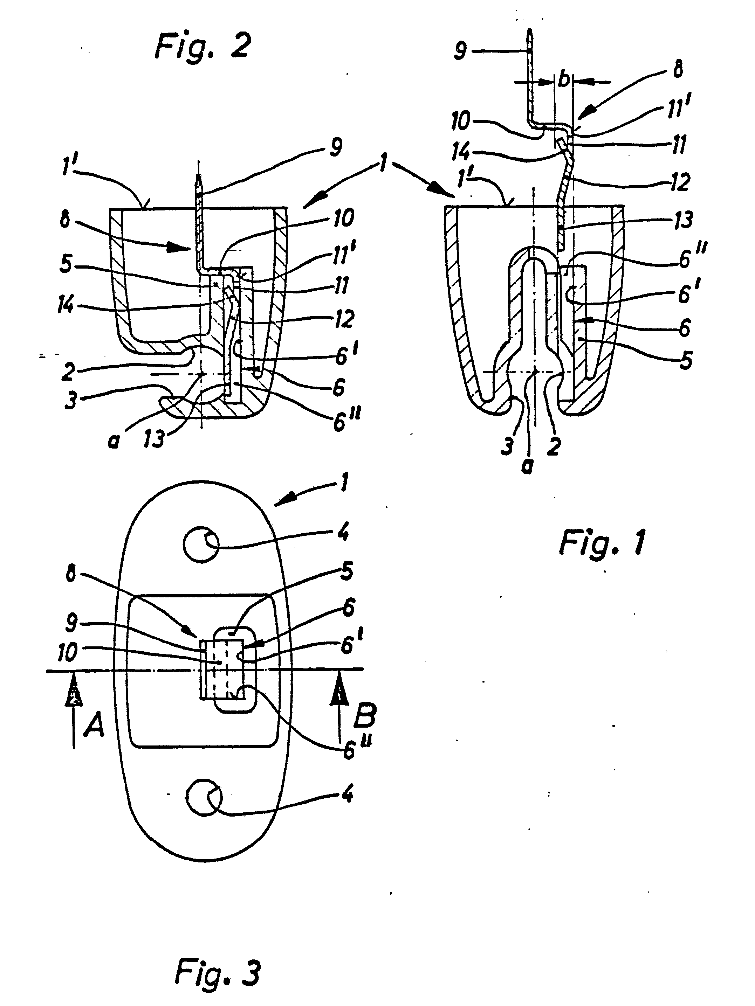

Der in den Fig. 1 bis 3 dargestellte Lagerbock 1 besteht aus Kunststoff und dient zum Anordnen der Lagerwelle einer nicht dargestellten Sonnenblende in einer Lageraufnahme 2. An diese schließt sich ein Einführschlitz 3 für das Einführen der Lagerwelle an, der nach unten (Fig. 1), seitlich (Fig. 2) oder auch schräg gerichtet sein kann. Über zwei Durchgangsbohrungen 4 wird der Lagerbock 1 im Fahrzeuginnenraum befestigt. Im Mittelbereich des Lagerbocks 1 ist ferner ein von seiner Unterseite abstehender Fortsatz 5 vorgesehen, der sich bis nahe zu seiner Anschraubebene 1' erstreckt. In dem Fortsatz 5 ist eine Aufnahmeöffnung 6 angeordnet, die zur Anschraubebene 1' des Lagerbocks 1 hin offen ist und sich nach unten bis über die parallel zur Anschraubebene 1' verlaufende Mittelebene der Lageraufnahme 2 hinaus erstreckt ; die Aufnahmeöffnung 6 ist dabei sacklochartig im Lagerbock 1 angeordnet. Ferner hat die Aufnahmeöffnung 6 ein rechteckförmiges, über seine gesamte Längserstreckung gleichgroßes Querschnittsprofil, dessen Breitseiten 6' parallel zur Längsmittelachse a der Lageraufnahme 2 verlaufen.

Wie aus den Fig. 1 bis 3 ersichtlich, ist zur Stromführung für die Spiegelbeleuchtung der Sonnenblende ein elektrisches Kontaktelement 8 vorgesehen, das in die Aufnahmeöffnung 6 verrastend eingesetzt wird und sich bis nahe zu deren Grund erstreckt. Das Kontaktelement 8 ist aus einem Blechstreifen gefertigt und hat einen nach oben ragenden Kabelanschluß 9 (Fig. 1), von dem eine Abwinkelung 10 rechtwinklig wegragt. An diese schließt sich ein zum Kabelanschluß 9 parallel verlaufender Mittelabschnitt 11 an, der in einen zur Ebene des Kabelanschlusses 9 hin verlaufenden Schrägabschnitt 12 übergeht, an den sich schließlich ein parallel zum Kabelanschluß 9 verlaufender Endabschnitt 13 anschließt. Zwischen dem Mittelabschnitt 11 und dem Schrägabschnitt 12 steht vom Kontaktelement 8 eine federnde Fixierzunge 14 ab, welche zur Abwinkelung 10 hin gerichtet ist und mit dem Schrägabschnitt 12 einen stumpfen Winkel einschließt. Das Maß b zwischen dem freien Ende der Fixierzunge 14 und der Rückseite 11' des Mittelabschnitts 11 ist etwas größer als die Breite der Schmalseiten 6'' der Aufnahmeöffnung 6, so daß das Kontaktelement 8 mit bloßem manuellem Kraftaufwand in die Aufnahmeöffnung 6 eingeschoben werden kann. Vor Anlage der Abwinkelung 10 am freien Ende des Fortsatzes 5 wird dabei die sich zwischen den Breitseiten 6' schräg erstreckende Fixierzunge 14 etwas zum Mittelabschnitt 11 hin gebogen und liegt dadurch stets federnd, also mit Eigenspannung, an der zugewandten Breitseite 6' an, wodurch das Kontaktelement 8 am Lagerbock 1 unverschiebbar festgelegt ist (Fig. 2).

Da das Kontaktelement 8 von der Fixierzunge 14 bis zum Bereich seines freien unteren Endabschnitts eine relativ große Längserstreckung hat und innerhalb der Aufnahmeöffnung 6 frei nach rückwärts federn kann, liegt es mit hohem Reibschluß und damit gutem elektrischen Kontakt an der in die Lageraufnahme 2 eingesetzten Lagerwelle der mit einem elektrisch beleuchteten Spiegel versehenen Sonnenblende an.

### Patentansprüche

1. Lagerbock für die Sonnenblende eines Kraftfahrzeugs, mit einer Lageraufnahme (2) für die Lagerwelle einer Sonnenblende und einer im Lagerblock vorgesehenen Aufnahmeöffnung (6) zum Einsetzen eines sich bis in den Bereich der Lageraufnahme (2) erstreckenden elektrischen Kontaktelements (8), wobei die Lageraufnahme (2) einen Einführschlitz (3) für die Lagerwelle aufweist, dadurch gekennzeichnet, daß die Aufnahmeöffnung (6) ein sich über ihre gesamte Längserstreckung gleichgroßes rechteckförmiges Querschnittsprofil aufweist und das elektrische Kontaktelement (8) mit wenigstens einem, von seiner Längserstreckung abstehenden, federnden Vorsprung (14) versehen ist, wodurch es mit geringem Kraftaufwand in die Aufnahmeöffnung einschiebbar ist und am Lagerbock (1) unter Eigenspannung festliegt.

2. Lagerbock nach Anspruch 1, dadurch gekennzeichnet, daß die Breitseiten (6') des rechteckigen Querschnittsprofils der Aufnahmeöffnung (6) so angeordnet sind, daß bei in die Aufnahmeöffnung eingesetztem Kontaktelement (8) dieses kraftschlüssig an der Lagerwelle anliegt.

3. Lagerbock nach Anspruch 1 und 2, dadurch gekennzeichnet, daß das Kontaktelement (8) ein Blechstreifen mit einem an einem Endabschnitt vorgesehenen Kabelanschluß (9) ist, wobei im Mittelbereich der Längserstreckung des Kontaktelements eine einen Anschlag bildende Abwinkelung (10) vorgesehen ist, an die sich ein parallel zur Ebene des Kabelanschlusses (9) verlaufender Mittelabschnitt (11) anschließt, der in einen sich zur Ebene des Kabelanschlusses hin erstreckenden Schrägabschnitt (12) übergeht, von dem schließlich ein parallel zu letzterem verlaufender Endabschnitt (13) wegragt.

4. Lagerbock nach Anspruch 3, dadurch gekennzeichnet, daß am Kontaktelement (8) zwischen dem Mittelabschnitt (11) und dem Schrägabschnitt (12) der federnde Vorsprung angeordnet ist, der als eine zur Abwinkelung (10) weisende, schrägverlaufende federnde Fixierzunge (14) ausgebildet ist.

### Claims

1. A bearing block for the sun visor of a motor vehicle, comprising a bearing mounting (2) for the bearing shaft of a sun visor and a receiving opening (6), provided in the bearing block, for the insertion of an electrical contact element (8) which extends into the region of the bearing mounting (2), in which the bearing mounting (2) has an introduction slot (3) for the bearing shaft, characterised in that the receiving opening (6) has a rectangular cross-sectional shape which is of equal size over its entire longitudinal extent, and the electrical contact element (8) is provided with at least one resilient projection (14), standing proud from its longitudinal extent, whereby it is able to be pushed into the receiving opening with a negligible application of force and lies firmly against the bearing block (1) under inherent force.

2. A bearing block according to claim 1, characterised in that the broad sides (6') of the rectangular cross-sectional shape of the receiving opening (6) are arranged such that, when the contact element (8) is inserted into the receiving opening, it rests in a force-locking manner against the bearing shaft.

3. A bearing block according to claim 1 and 2, characterised in that the contact element (8) is a sheet-metal strip provided on an end section with a cable connection (9), in which, in the central region of the longitudinal extent of the contact element, a bend (10) is provided, forming a stop, joining on to which is a central section (11), running parallel to the plane of the cable connection (9), which central section continues into an inclined section (12) extending towards the plane of the cable connection, there being finally an end section (13) which projects away from the inclined section and runs parallel to the cable connection.

4. A bearing block according to claim 3, characterised in that the resilient projection, which is constructed as an inclined, resilient fixing tongue (14) pointing towards the bend (10), is arranged on the contact element (8) between the central section (11) and the inclined section (12).

### Revendications

1. Dispositif d'articulation pour pare-soleil de véhicule, avec une prise d'articulation (2), pour l'arbre d'articulation d'un pare-soleil et une ouverture de prise (6) prévue dans le dispositif d'articulation, pour introduire un élément de contact (8) électrique s'étendant jusque dans la zone de la prise d'articulation (2), la prise d'articulation (2) possédant à cette occasion une fente d'introduction (3) pour l'arbre d'articulation, caractérisé en ce que l'ouverture de prise (6) possède un profil de section de forme rectangulaire et d'égale importance, sur toute l'étendue de sa longueur et que l'élément de contact électrique (8) possède au moins une saillie s'écartant de manière élastique de son étendue longitudinale, faisant qu'il est insérable dans l'ouverture de prise, avec un effort limité et qu'il est fixé sur le dispositif d'articulation (1) par tension propre.

2. Dispositif d'articulation selon la revendication 1, caractérisé en ce que les côtés larges (6') du profil de section rectangulaire de l'ouverture de prise (6) sont arrangés de telle sorte que lorsque l'élément de contact (8) est introduit dans l'ouverture de prise, celui-ci appuie sur l'arbre d'articulation, sous la force d'un ressort.

3. Dispositif d'articulation selon la revendication 1 et 2, caractérisé en ce que l'élément de contact (8) est une bande de tôle avec un raccordement de câble (9) prévu à une extrémité, un développement (10) formant une butée étant prévu dans la zone médiane de l'étendue longitudinale de l'élément de contact, auquel se raccorde une section médiane (11) qui se développe parallèlement au plan du raccordement de câble (9) et qui se transforme en une section en biais (12) se développant parallèlement par rapport au plan du raccordement de câble, duquel part finalement une section d'extrémité (13), qui se développe parallèlement à cette dernière.

4. Dispositif d'articulation selon la revendication 3, caractérisé en ce que la saillie élastique est arrangée sur l'élément de contact, entre la section médiane (11) et la section en biais (12) et qui est constituée sous forme d'une languette de fixation (14) à ressort, se présentant en se développant en biais par rapport au développement (10).

## Fig. 2

## Fig. 1

## Fig. 3